# EUROPÄISCHE PATENTSCHRIFT

(11) **EP 3 577 024 B1**
(45) Veröffentlichungstag und Bekanntmachung des Hinweises auf die Patenterteilung: **21.04.2021**
(21) Anmeldenummer: 18703477.2
(22) Anmeldetag: 17.01.2018
(51) Int. Cl.: B64D 41/00, H01M 8/0612, H01M 8/0662, B64D 45/00

(54) **VERFAHREN UND VORRICHTUNG ZUR ERZEUGUNG VON ELEKTRISCHER ENERGIE**
METHOD AND DEVICE FOR GENERATING ELECTRICAL ENERGY
PROCÉDÉ ET DISPOSITIF DE GÉNÉRATION D'ÉNERGIE ÉLECTRIQUE

(30) Priorität: 04.02.2017 DE 102017001056
(43) Veröffentlichungstag der Anmeldung: 11.12.2019
(73) Patentinhaber: Diehl Aerospace GmbH, 88662 Überlingen (DE)
(72) Erfinder: TICHY, Franz, 64859 Eppertshausen (DE); SPETH, Bernd, 88662 Überlingen (DE); HARWARDT, Eduard, 35260 Stadtallendorf (DE)
(74) Vertreter: Diehl Patentabteilung
(86) Internationale Anmeldenummer: PCT/EP2018/000023
(87) Internationale Veröffentlichungsnummer: WO 2018/141470

(56) Entgegenhaltungen:
- EP-A2- 0 977 293
- EP-A2- 1 619 738
- WO-A2-00/71644
- FR-A1- 3 026 233
- GB-A- 2 442 309
- US-A1- 2009 169 931
- US-A1- 2013 200 216

## Beschreibung

Die Erfindung betrifft ein Verfahren und eine Vorrichtung zur Erzeugung elektrischer Energie, insbesondere zur Erzeugung von elektrischer Energie für ein Luftfahrzeug.

Die DE 10 2004 026 226 A1 offenbart ein Luftfahrzeug mit einem integrierten elektrochemischen Versorgungssystem. Dabei ist ein erster elektrochemischer Reaktor vorgesehen, welcher ein im Luftfahrzeug entstehendes Abwasser nach Aufreinigung oder Entsalzung in die Bestandteile Wasserstoff und Sauerstoff aufspaltet. Der Wasserstoff und der Sauerstoff können einem zweiten Reaktor zugeführt werden, bei dem es sich beispielsweise um eine Brennstoffzelle handelt. Mittels der Brennstoffzelle wird aus dem Wasserstoff und dem Sauerstoff sowie kohlenwasserstoffhaltigen Energieträgern, beispielsweise Kerosin, elektrische Energie und Wasser hergestellt. - Der erste und der zweite Reaktor sind von einem gasdichten Schutzgehäuse umgeben, welches mit einem Inertgas gefüllt ist.

Die DE 10 2005 053 692 B3 offenbart eine Brennstoffzelle zur Verwendung in einem Flugzeug. Zum Brandschutz ist die Brennstoffzelle in einem Schutzgehäuse aufgenommen, welches mit einem Inertgas gefüllt ist. Als Inertgas wird mit Stickstoff angereichertes Kathodenabgas der Brennstoffzelle verwendet. - Das aus dem Kathodenabgas gebildete Inertgas weist nachteiligerweise einen relativ hohen Gehalt an Restsauerstoff auf.

Die US 2009/0155642 A1 offenbart ein reformat-betriebenes Brennstoffzellensystem. Dabei wird in einem als Reformer ausgebildeten ersten Reaktor aus einem flüssigen Brennstoff, beispielsweise Methanol, Wasserstoff hergestellt, welcher sodann einer stromabwärts nachgeschalteten Brennstoffzelle zur Erzeugung elektrischer Energie zugeführt wird. Der erste Reaktor kann eine Aufreinigungsstufe umfassen, mit der ein Anteil von Fremdgasen im Wasserstoff reduziert wird.

Aus der DE 10 2012 023 531 A1 ist ein Verfahren zur Erzeugung eines Betriebsstoffs an Bord eines Luftfahrzeugs bekannt. Dabei ist eine Brennstoffzelleneinheit mit zumindest einer Brennstoffzelle in einem ersten Rollwagen untergebracht. In einem zweiten Rollwagen ist eine Speichereinheit zur Aufnahme von Brennstoff zum Betrieb der Brennstoffzelle aufgenommen. Der erste und der zweite Rollwagen können so miteinander gekoppelt werden, dass der Brennstoffzelle Brennstoff zuführbar ist. Die Brennstoffzelle ist im ersten Rollwagen in einem Schutzgehäuse untergebracht, welches mit einem Inertgas gefüllt ist. Zur Herstellung des Inertgases wird Kathoden- und/oder Anodenabgas verwendet.

Kathodenabgas enthält einen relativ hohen Gehalt an Restsauerstoff von etwa 9%. Auch Anodenabgas kann je nach Zusammensetzung als Inertgas verwendet werden. Infolgedessen kann unter Verwendung von Kathoden- und/oder Anodenabgas als Inertgas eine Explosionsgefahr im Falle eines Austritts von Wasserstoff aus der Brennstoffzelle nicht vollständig ausgeschlossen werden.

Aus der US 2013/0200216 A1 ist eine Vorrichtung zur Erzeugung eines Inertgases bekannt, die einen Brennstofftank für einen Brennstoff, mindestens eine Brennstoffzelle mit einer Kathode, einer Anode, einem Reaktor zum Reformieren von Brennstoff aus dem Brennstofftank in ein wasserstoffhaltiges Brenngas, und einen Inertgasauslass umfasst. Der Reaktor umfasst einen Brenngasauslass, der mit einem Brenngaseinlass verbunden ist, der an der Anode der Brennstoffzelle angeordnet ist. Der Inertgasauslass ist stromabwärts des Reaktors angeordnet und bildet eine Fluidsenke für nicht wasserstoffhaltige Reaktionsprodukte des Reaktors.

Aufgabe der Erfindung ist es, die Nachteile nach dem Stand der Technik zu beseitigen. Es soll insbesondere ein sicherheitstechnisch verbessertes Verfahren zur Erzeugung elektrischer Energie mittels eines mit einem Reformatgas betriebenen Brennstoffzellensystems angegeben werden. Nach einem weiteren Ziel der Erfindung soll die Effizienz des Verfahrens verbessert werden. Eine weitere Aufgabe der vorliegenden Erfindung besteht in der Angabe eines in sicherheitstechnischer Hinsicht verbesserten Brennstoffzellensystems. Das Brennstoffzellensystem soll ferner eine verbesserte Effizienz hinsichtlich der Erzeugung elektrischer Energie aufweisen.

Diese Aufgabe wird durch die Merkmale der Patentansprüche 1 und 16 gelöst. Zweckmäßige Ausgestaltungen der Erfindung ergeben sich aus den Merkmalen der Patentansprüche 2 bis 15 und 17 bis 25.

Nach Maßgabe der Erfindung wird ein Verfahren zur Erzeugung elektrischer Energie mittels eines mit einem Reformatgas betriebenen Brennstoffzellensystems mit folgenden Schritten vorgeschlagen:
Bereitstellen eines Brennstoffzellensystems mit einem ersten Reaktor zur Umwandlung eines Brennstoffs in ein erstes Brenngas und einem dem ersten Reaktor stromabwärts nachgeschalteten zweiten Reaktor, wobei der zweite Reaktor eine oder mehrere Brennstoffzellen zur Erzeugung elektrischer Energie unter Bildung eines Kathoden- sowie eines Anodenabgases bildet, und wobei zumindest der zweite Reaktor von einem Schutzgehäuse umgeben ist,
Bereitstellen einer Gastrenneinrichtung, mit der zumindest eines der Gase CO₂, N₂ und/oder ein CO₂ und N₂ enthaltendes Teilgasgemisch aus dem ersten Brenngas oder einem daraus gebildeten weiteren Gasgemisch abtrennbar ist,
Zuführen lediglich eines Teils des ersten Brenngases oder des daraus gebildeten weiteren Gasgemischs zur Gastrenneinrichtung,
Abtrennen der Gase N₂ oder CO₂ oder des Teilgasgemischs aus dem ersten Brenngas oder dem weiteren Gasgemisch,
Zuführen der abgetrennten Gase N₂ oder CO₂ oder des abgetrennten Teilgasgemischs als Inertgas in das Schutzgehäuse und
Zuführen einer Mischung aus dem ersten Brenngas und eines mit H₂ angereicherten Restgases als zweites Brenngas zum Betrieb der Brennstoffzellen.

Im Sinne der vorliegenden Erfindung handelt es sich bei einem "Brennstoff" um einen beliebigen Kohlenwasserstoff der allgemeinen Formel CₓH_{y}O_{z} oder ein Gemisch verschiedener Kohlenwasserstoffe. Bei den Kohlenwasserstoffen kann es sich beispielsweise um Kerosin, Erdgas, Alkohol, insbesondere Methanol, oder dgl. handeln.

Unter einem "Reaktor" wird im Sinne der vorliegenden Erfindung eine Einrichtung verstanden, mit der unter Einwirkung von Temperatur und/oder Druck und/oder Hilfsstoffen, wie Katalysatoren, zugeführte Stoffe, z. B. Kohlenwasserstoffe, in einen weiteren Stoff umgewandelt werden. Bei dem Stoff kann es sich um ein Stoffgemisch, insbesondere ein Flüssigkeits- oder Gasgemisch handeln. Zur Umwandlung des Stoffs im Reaktor muss typischerweise Energie aufgewandt werden.

Unter einem "Brenngas" wird ein Gas oder Gasgemisch verstanden, welches zum Betrieb einer Brennstoffzelle geeignet ist.

Unter einem "weiteren Gasgemisch" wird ein zum Betrieb einer Brennstoffzelle geeignetes weiteres Brenngas, ein von der Brennstoffzelle gebildetes Kathoden- oder Anodenabgas oder ein Abgas verstanden, welches von einer der Brennstoffzelle nachgeordneten Abgasreinigungsstufe gebildet wird.

Das erfindungsgemäße Verfahren betrifft ein mit einem Reformatgas betriebenes Brennstoffzellensystem. Dabei wird ein Brennstoff einem ersten Reaktor zugeführt, in welchem der Brennstoff in ein erstes Brenngas umgewandelt wird. Der erste Reaktor kann dazu einen herkömmlichen Reformer umfassen. Bei dem Brennstoffzellensystem ist einer Hauptstromrichtung des ersten Brenngases oder daraus hergestellter weiterer Gasgemische folgend ein zweiter Reaktor nachgeordnet, welcher eine von einem Schutzgehäuse umgebende Brennstoffzelle umfasst. Der zweite Reaktor kann auch mehrere Brennstoffzellen umfassen. Ferner ist eine Gastrenneinrichtung vorgesehen, mit der aus dem ersten Brenngas oder einem daraus gebildeten weiteren Gasgemisch insbesondere die Gase CO₂, N₂ und/oder ein CO₂ und N₂ enthaltendes Teilgasgemisch abtrennbar ist. Nach dem erfindungsgemäßen Verfahren wird zumindest ein Teil des ersten Brenngases oder des daraus gebildeten weiteren Gasgemischs der Gastrenneinrichtung zugeführt. Die separat abgetrennten Gase N₂ oder CO₂ oder das separat abgetrennte Teilgasgemisch werden sodann als Inertgas zum Befüllen des Schutzgehäuses verwendet. Vor allem CO₂, aber auch N₂, eignet sich hervorragend als Inertgas. Sie zeichnen sich insbesondere gegenüber herkömmlicherweise verwendeter sauerstoffreduzierter Luft (ODA) durch eine verbesserte Inertisierungswirkung aus. Damit kann besonders wirksam die Gefahr einer Explosion im Falle einer Leckage der Brennstoffzelle herabgesetzt werden.

Durch die Abtrennung der Gase N₂, CO₂ kann eine anschließende Reaktion positiv beeinflusst und/oder der Gasstrom massenmäßig verringert werden. Infolgedessen können stromabwärts vorgesehene Reaktoren kleiner dimensioniert werden oder die Druckabfälle in stromabwärtigen Reaktoren verringert werden. Infolgedessen kann eine aufzuwendende Leistung für den Gastransport verringert werden.

Der in der Gastrenneinrichtung verbleibende Rest oder ein Teil des Rests des der Gastrenneinrichtung zugeführten Brenngases bzw. weiteren Gasgemisches nach Abtrennung eines der Gase CO₂, N₂ und/oder ein CO₂ und N₂ enthaltendes Teilgasgemisch wird als Restgas bezeichnet.

Das Restgas bildet ein zweites Brenngas, das der Brennstoffzelle oder einer weiteren Brennstoffzelle zum Betrieb zugeführt wird. Das Restgas bzw. zweite Brenngas unterscheidet sich in seiner Zusammensetzung vom ersten Brenngas. Das zweite Brenngas ist mit H₂ angereichert oder wird durch H₂ gebildet.

In der Gastrenneinrichtung wird somit ein Restgas gebildet, welches einen verminderten Gehalt an N₂ und/oder CO₂ aufweist bzw. mit H₂ angereichert oder aus H₂ gebildet ist.

Unter einer "Gastrenneinrichtung" wird zweckmäßigerweise eine Einrichtung verstanden, mit der ein Gasgemisch ohne Zuführung thermischer Energie und/oder Erhöhung von Druck trennbar ist. Eine Abtrennung von N₂ kann beispielsweise durch das Linde-Verfahren sowie eine Abtrennung von H₂ durch die Verwendung von Palladiumplättchen erfolgen. Ferner ist eine Abtrennung von H₂, N₂ oder CO₂ durch Folien oder durch Absorption bekannt. Daneben kann CO₂ durch Adsorption, d. h. durch Bindung an einen Feststoff, abgetrennt werden. Bei mobilen Anwendungen kommen zur Durchführung der Abtrennung der vorgenannten Gase insbesondere Membranverfahren zum Einsatz. Dabei trennt eine permeable Membran den Gasstrom in die Bestandteile auf.

Unter dem Begriff "Hauptstromrichtung" wird der direkte Weg, d. h. ohne Abzweigungen und/oder Umleitungen, des Gasstroms durch die hintereinander geschalteten Reaktoren verstanden.

Nach dem vorgeschlagenen Verfahren wird lediglich ein Teil des ersten Brenngases der Gastrenneinrichtung zugeführt. In diesem Fall bleibt der im Hauptstrom verbleibende andere Teil des ersten Brenngases in seiner Zusammensetzung unverändert. In einer nicht zur Erfindung gehörenden Variante ist es aber auch möglich, das erste Brenngas insgesamt der Gastrenneinrichtung zuzuführen. In diesem Fall wird mittels der Gastrenneinrichtung ein weiteres bzw. zweites Brenngas erzeugt, welches sich in seiner Zusammensetzung vom ersten Brenngas unterscheidet. Das weitere bzw. zweite Brenngas weist insbesondere einen verminderten Gehalt an N₂ und/oder CO₂ auf. Eine Verminderung, insbesondere des CO₂-Gehalts im Hauptgasstrom, kann eine positive Beeinflussung von Reaktionsgleichgewichten bei nachfolgenden Reaktionen, beispielsweise bei der Water-Gas-Shift-Reaktion, zur Folge haben.

Mit der Gastrenneinrichtung kann als Gas weiterhin separat auch H₂ abgetrennt und als zweites Brenngas zum Betrieb der Brennstoffzelle oder einer weiteren Brennstoffzelle verwendet werden. Das steigert die Effizienz des Verfahrens.

Mit dem H₂ können bei einer Aufspaltung in zwei H₂-Teilgasströme auch unterschiedliche Brennstoffzellentypen betrieben werden. Das ermöglicht eine dissimilare redundante Betriebsweise, welche insbesondere vorteilhaft bei der Verwendung in Luftfahrzeugen ist.

Beispielsweise können im redundanten Betrieb eine Niedertemperatur-Polymerelektrolytmembran-Brennstoffzelle (NTPEM) und eine Festoxid-Brennstoffzelle (SOFC) betrieben werden.

Auch die Abtrennung von H₂ aus dem Hauptgasstrom kann eine positive Verschiebung des Reaktionsgleichgewichts bei der Water-Gas-Shift-Reaktion bewirken. Damit kann die Effizienz des Verfahrens bzw. der Wirkungsgrad der Erzeugung elektrischer Energie verbessert werden.

Nach einer vorteilhaften Ausgestaltung des Verfahrens wird ein Anteil an CO im ersten Brenngas mittels eines stromabwärts des ersten Reaktors nachgeschalteten, als Water-Gas-Shift-Stufe ausgebildeten dritten Reaktors und/oder eines als PrOx-Stufe ausgestalteten vierten Reaktors vermindert. Die Abkürzung "PrOx" steht für "Preferential Oxidation". Es handelt sich dabei um eine bevorzugte Oxidation eines meist gasförmigen Stoffs an einem Katalysator. Im Kontext der vorliegenden Erfindung handelt es sich dabei insbesondere um die Oxidation von CO an einem Katalysator zu CO₂. Die Verwendung des vorgeschlagenen dritten und/oder vierten Reaktors ist insbesondere dann vorteilhaft, wenn Brennstoffzellentypen verwendet werden, deren Effizienz durch einen hohen Gehalt an CO im Brenngas vermindert wird. Das Vorsehen des dritten und/oder vierten Reaktors ist insbesondere dann vorteilhaft, wenn als Brennstoffzelle eine Niedertemperatur-Polymerelektrolytmembran-Brennstoffzelle (NTPEM) oder eine Hochtemperatur-Polymerelektrolytmembran-Brennstoffzelle (HTPEM) verwendet wird.

Nach einer weiteren Ausgestaltung des Verfahrens kann auch das Kathoden- und/oder Anodengas zumindest teilweise als weiteres Gasgemisch der Gastrenneinrichtung zugeführt werden. Damit kann aus dem Anodenabgas ein Rest an H₂ abgetrennt und erneut als zweites Brenngas zum Betrieb der Brennstoffzelle oder einer weiteren Brennstoffzelle verwendet werden. Ferner können aus dem Kathoden- und/oder Anodenabgas insbesondere die Gase N₂ und/oder CO₂ oder ein CO₂ und N₂ enthaltendes Teilgasgemisch gewonnen und als Inertgas verwendet werden. Ein solches Inertgas ist besonders arm an Restsauerstoff.

Nach einer weiteren Ausgestaltung der Erfindung ist dem zweiten Reaktor stromabwärts ein fünfter Reaktor zur Umwandlung des Kathoden- und/oder Anodenabgases nachgeschaltet, wobei ein im fünften Reaktor gebildetes Abgas zumindest teilweise als weiteres Gasgemisch der Gastrenneinrichtung zugeführt werden kann. Auch aus dem Abgas kann insbesondere als Gas CO₂ abgetrennt und als Inertgas verwendet werden.

Das erste Brenngas oder das weitere Gasgemisch kann gasförmiges H₂O enthalten. Das gasförmige H₂O kann mittels der Gastrenneinrichtung abgetrennt und ebenfalls als Inertgas oder zur Herstellung feuchter, sauerstoffreduzierter Luft (ODA) verwendet werden. Mit gasförmigem H₂O versetztes Inertgas wirkt der Ausbreitung von Flammen entgegen. Feuchte, sauerstoffreduzierte Luft kann beispielsweise in Laderäumen von Luftfahrzeugen zur Inertisierung verwendet werden.

Nach einer weiteren Ausgestaltung des Verfahrens kann das gasförmige H₂O in flüssiges H₂O umgewandelt und zur externen Verwendung ausgekoppelt werden. Unter der "Auskopplung zur externen Verwendung" wird verstanden, dass ein entsprechender Stoff aus dem Verfahren abgeführt und an anderer Stelle verwendet wird. Beispielsweise kann das hergestellte Wasser einem Wasservorrat in einem Luftfahrzeug zugeführt werden. Das erste Brenngas oder das weitere Gasgemisch kann gasförmiges H₂O enthalten. Das gasförmige H₂O kann mittels eines Kondensators in flüssiges H₂O umgewandelt und zur externen Verwendung ausgekoppelt und/oder einer internen Verwendung zugeführt werden. Die Abtrennung des flüssigen H₂O kann auch stromaufwärts der Gastrenneinrichtung erfolgen.

Bei der Umwandlung von gasförmigem H₂O in flüssiges H₂O freiwerdende Wärme kann zur externen Verwendung ausgekoppelt werden. Beispielsweise kann die Wärme über einen Wärmetauscher zur Erwärmung von Trinkwasser oder Kabinenluft in einem Luftfahrzeug verwendet werden.

Das erste Brenngas und/oder das weitere Brenngas werden in der Gastrenneinrichtung vorzugsweise unter Verwendung von Membranen in die einzelnen Gase getrennt. Zur Abtrennung von CO₂ eignen sich insbesondere Membranen aus Polyethylenglycol, Polyamid, Polyimid und dgl. Zur Abtrennung von N₂ eignen sich Hohlfasermembranen. H₂ kann beispielsweise mittels aus Metallfolien hergestellter Membranen abgetrennt werden. Derartige Metallfolien können aus Palladium, Palladiumlegierungen, refraktären Metallen wie Vanadium, Niob oder Tantal oder deren Legierungen hergestellt sein.

Als Brennstoff kann beim erfindungsgemäßen Verfahren insbesondere Kohlenwasserstoff der allgemeinen Formel CₓH_{y}O_{z} oder ein Gemisch verschiedener Kohlenwasserstoffe, insbesondere Kerosin, Erdgas, Alkohol, vorzugsweise Methanol, verwendet werden. Auch die Verwendung anderer flüssiger oder gasförmiger Kohlenwasserstoffe ist selbstverständlich möglich.

Nach einer vorteilhaften Ausgestaltung des Verfahrens kann mittels der Gastrenneinrichtung abgetrenntes CO₂ und/oder N₂ zur externen Verwendung, insbesondere zur Inertisierung eines Frachtraums und/oder eines Tankraums in einem Luftfahrzeug, ausgekoppelt werden. Ferner ist es möglich, mittels der Gastrenneinrichtung abgetrenntes CO₂ und/oder N₂ gemischt mit gasförmigen H₂O als Löschmittel für einen Frachtraum in einem Luftfahrzeug zu verwenden.

Nach einer weiteren Ausgestaltung kann ein Teil des ersten Brenngases abgezweigt und zur externen Verwendung, insbesondere zum Betrieb einer weiteren Brennstoffzelle, ausgekoppelt werden. Es ist auch möglich, das Anodenabgas zur Verwendung als weiteres Brenngas zur externen Verwendung auszukoppeln.

Nach einer vorteilhaften Ausgestaltung ist nicht nur der zweite Reaktor, sondern mehrere Reaktoren, vorzugsweise sämtliche Reaktoren, vom Schutzgehäuse umgeben. Ferner kann auch die Gastrenneinrichtung, eine oder mehrere Leitungen, welche die Reaktoren miteinander verbinden, mit der Gastrenneinrichtung verbundene Zuleitungen und/oder in die Leitungen sowie Zuleitungen einschaltete Regelventile vom Schutzgehäuse umgeben sein.

Nach weiterer Maßgabe der Erfindung wird ein Brennstoffzellensystem vorgeschlagen, mit
einem ersten Reaktor zur Umwandlung eines Brennstoffs in ein erstes Brenngas,
einem dem ersten Reaktor stromabwärts nachgeschalteten zweiten Reaktor, wobei der zweite Reaktor eine oder mehrere Brennstoffzellen zur Erzeugung elektrischer Energie unter Bildung eines Kathoden- sowie eines Anodenabgases bildet, und wobei zumindest der zweite Reaktor von einem Schutzgehäuse umgeben ist, und wobei der erste Reaktor ausgangsseitig über eine zweite Leitung mit dem zweiten Reaktor verbunden ist,
einer Gastrenneinrichtung, mit der zumindest eines der Gase CO₂, N₂ und/oder ein CO₂ und N₂ enthaltendes Teilgasgemisch aus dem ersten Brenngas oder einem daraus gebildeten weiteren Gasgemisch abtrennbar ist,
einer ersten Zuführeinrichtung zum Zuführen lediglich eines Teils des ersten Brenngases oder des daraus gebildeten weiteren Gasgemischs zur Gastrenneinrichtung, einer zweiten Zuführeinrichtung zum Zuführen der mittels der Gastrenneinrichtung abgetrennten Gase N₂ oder CO₂ oder des abgetrennten Teilgasgemischs zum Schutzgehäuse und
einer dritten Zuführeinrichtung zum Zuführen eines mit H₂ angereicherten, in der Gastrenneinrichtung gebildeten Restgases als zweites Brenngas zum zweiten Reaktor, wobei dem zweiten Reaktor im Betrieb eine Mischung aus dem ersten Brenngas und dem zweiten Brenngas zugeführt ist.

Im Sinne der Erfindung wird unter einer "Zuführeinrichtung" eine Leitung verstanden, welche mit der Gastrenneinrichtung verbunden ist. Die Zuführeinrichtung kann eines oder mehrere Ventile umfassen, mit denen ein Durchfluss durch die Leitung ermöglicht, unterbrochen oder mengenmäßig gesteuert werden kann. Die Zuführeinrichtung kann auch zumindest einen der folgenden Sensoren umfassen: Temperatursensor, Drucksensor, Massestromsensor und dgl. Mittels von den Sensoren erfassten Parametern ist es möglich, eine Menge des durch die Leitung der Gastrenneinrichtung zugeführten ersten Brenngases oder weiteren Gasgemischs zu steuern. Desgleichen kann eine Menge von mit der Gastrenneinrichtung hergestellten getrennten Gasen oder eines Teilgasgemischs gesteuert oder geregelt werden.

Im Rahmen der Erfindung können mehrere erste Zuführeinrichtungen zum Zuführen des ersten Brenngases oder des daraus gebildeten weiteren Gasgemischs zur Gastrenneinrichtung vorgesehen sein. Die ersten Zuführeinrichtungen zweigen dabei jeweils an verschiedenen Stellen im Hauptgasstrom ab. Beispielsweise kann stromabwärts jedes Reaktors eine erste Zuführeinrichtung vorgesehen sein. In ähnlicher Weise können auch mehrere dritte Zuführeinrichtungen vorgesehen sein, um stromaufwärts vorgegebener Reaktoren den Hauptgasstrom mit Wasserstoff anzureichern. Es kann eine Steuerung vorgesehen sein, mit der die Zuführeinrichtungen derart steuerbar sind, dass ein möglichst sauerstoffarmes Inertgas hergestellt und dem Schutzgehäuse zugeführt wird. Die Steuerung ist zweckmäßigerweise so ausgestaltet, dass ferner die Effizienz der Herstellung elektrischer Energie mittels der zumindest einen Brennstoffzelle verbessert wird.

Nach einer vorteilhaften Ausgestaltung ist die Gastrenneinrichtung außerdem so ausgebildet, dass damit separat auch H₂ aus dem ersten Brenngas oder dem daraus gebildeten weiteren Gasgemisch abtrennbar ist. H₂ kann der Brennstoffzelle und/oder einer weiteren Brennstoffzelle als Brennstoff zugeführt werden.

Dem ersten Reaktor kann stromabwärts ein als Water-Gas-Shift-Stufe ausgebildeter dritter Reaktor und/oder ein als PrOx-Stufe ausgebildeter vierter Reaktor nachgeschaltet sein. Nach einer weiteren Ausgestaltung ist eine vierte Zuführeinrichtung zum Zuführen zumindest eines Teils des Kathoden- und/oder Anodenabgases als weiteres Gasgemisch zur Gastrenneinrichtung vorgesehen. Ferner kann dem zweiten Reaktor stromabwärts ein fünfter Reaktor zur Umwandlung des Kathoden- und/oder des Anodenabgases nachgeschaltet sein. Das Vorsehen der vierten Zuführeinrichtung stellt sicher, dass der Gastrenneinrichtung jederzeit eine ausreichende Menge an Gasgemischen zugeführt wird, so dass immer eine ausreichende Menge an Inertgas hergestellt und dem Schutzgehäuse zugeführt werden kann. Ferner kann damit erreicht werden, dass im Verfahren ungenutzter Wasserstoff als zweiter Brennstoff verwendet und damit eine besonders effiziente Erzeugung elektrischer Energie erreicht werden kann.

Ferner kann eine Einrichtung zur Umwandlung von mittels der Gastrenneinrichtung abgetrenntem gasförmigen H₂O in flüssiges H₂O vorgesehen sein. Dabei kann es sich um einen Kondensator handeln. Das flüssige H₂O kann zur externen Verwendung ausgekoppelt werden. Dazu kann eine separate Leitung vorgesehen sein.

Nach einer weiteren Ausgestaltung ist ein Kondensator zum Abtrennen von im ersten Brenngas oder im weiteren Gasgemisch enthaltenen gasförmigen H₂O vorgesehen. Ein solcher Kondensator kann der Gastrenneinrichtung vor- oder auch nachgeschaltet sein.

Ferner kann eine Einrichtung zur Auskopplung von bei der Umwandlung von gasförmigem H₂O in flüssiges H₂O frei werdender Wärme vorgesehen sein. Es kann sich dabei beispielsweise um einen Wärmetauscher handeln.

Bei der Gastrenneinrichtung handelt es sich vorzugsweise um eine mit spezifischen Membranen versehene Gastrenneinrichtung, mit denen die jeweiligen Gase aus dem ersten Brenngas oder aus dem weiteren Gasgemisch abtrennbar sind.

Vorteilhafterweise ist nicht nur der zweite Reaktor, sondern mehrere Reaktoren, vorzugsweise sämtliche Reaktoren, vom Schutzgehäuse umgeben. Ferner kann auch die Gastrenneinrichtung, eine oder mehrere Leitungen, welche die Reaktoren miteinander verbinden, mit der Gastrenneinrichtung verbundene Zuleitungen und/oder in die Leitungen sowie Zuleitungen einschaltete Regelventile vom Schutzgehäuse umgeben sein.

Nachfolgend werden Ausgestaltungen der Erfindung anhand der Zeichnungen näher erläutert. Es zeigen:
- Fig. 1A: ein erstes Brennstoffzellensystem,
- Fig. 1B: eine Abwandlung des ersten Brennstoffzellensystems nach Fig. 1A,
- Fig. 2: ein zweites Brennstoffzellensystem,
- Fig. 3: ein drittes Brennstoffzellensystem,
- Fig. 4: ein viertes Brennstoffzellensystem und
- Fig. 5: ein fünftes Brennstoffzellensystem.

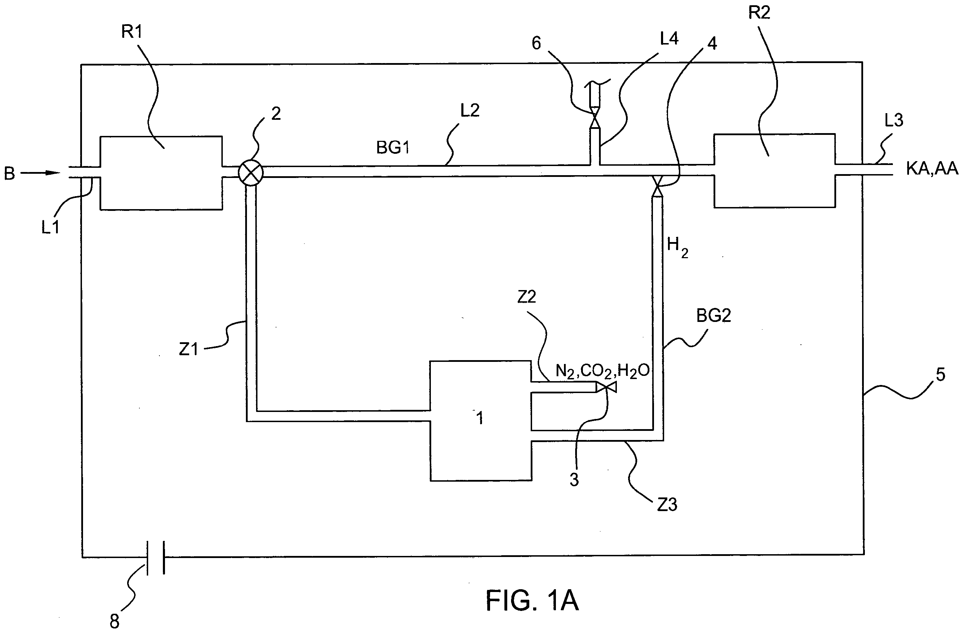

Fig. 1A zeigt schematisch ein erstes Brennstoffzellensystem. Eine erste Leitung L1 zum Zuführen eines Brennstoffs B mündet in einen ersten Reaktor R1. Bei dem Brennstoff B kann es sich beispielsweise um Methanol, Kerosin oder dgl. handeln. Der erste Reaktor R1 umfasst einen Reformer. Er ist ausgangsseitig über eine zweite Leitung L2 mit einem stromabwärts nachgeschalteten zweiten Reaktor R2 verbunden. Der zweite Reaktor R2 umfasst zumindest eine Brennstoffzelle, z. B. eine Festoxid-Brennstoffzelle, NTPEM, HTPEM oder dgl. Von der zweiten Leitung L2 zweigt eine erste Zuleitung Z1 ab, welche mit einer Gastrenneinrichtung 1 verbunden ist. Mit dem Bezugszeichen 2 ist ein erstes Sperr- bzw. Regelventil bezeichnet, mit dem eine Menge eines Stroms eines aus dem ersten Reaktor R1 austretenden ersten Brenngases BG1 so regelbar ist, dass der Strom teilweise oder auch insgesamt der ersten Zuleitung Z1 zugeführt werden kann.

Von der Gastrenneinrichtung 1 erstreckt sich ausgangsseitig eine zweite Zuleitung Z2 zum Abführen von N₂ und/oder CO₂ und/oder H₂O. Die zweite Zuleitung Z2 ist mittels eines zweiten Sperr- bzw. Regelventils 3 absperrbar. Eine ausgangsseitig von der Gastrenneinrichtung 1 sich erstreckende dritte Zuleitung Z3 mündet in die zweite Leitung L2. Die dritte Zuleitung Z3 ist mittels eines dritten Sperr- bzw. Regelventils 4 absperrbar. Mit dem Bezugszeichen 5 ist ein Schutzgehäuse bezeichnet, welches hier den ersten Reaktor R1, den zweiten Reaktor R2, die Gastrenneinrichtung 1 sowie die Leitungen L1, L2, L3 und die Zuleitungen Z1, Z2, Z3 zumindest abschnittsweise umgibt. Es kann selbstverständlich auch sein, dass das Schutzgehäuse 5 lediglich den zweiten Reaktor R2 umgibt. In diesem Fall mündet dann die zweite Zuleitung Z2 in das Schutzgehäuse 5.

Aus einer ausgangsseitig vom zweiten Reaktor R2 sich erstreckenden dritten Leitung L3 bzw. Leitungen (hier nicht gezeigt) tritt Kathodenabgas KA und Anodenabgas AA aus. Mit dem Bezugszeichen L4 ist eine vierte Leitung bezeichnet, welche stromaufwärts des zweiten Reaktors R2 in die zweite Leitung L2 mündet. In die vierte Leitung L4 ist ein viertes Sperr- bzw. Regelventil 6 eingeschaltet, mit dem ein Massestrom eines durch die vierte Leitung L4 zugeführten Gases gesteuert oder geregelt werden kann. Falls durch die vierte Leitung L4 beispielsweise Luft oder Sauerstoff zugeführt wird, kann die vierte Leitung L4 auch unmittelbar an den jeweiligen Reaktor angeschlossen sein. Je nach Art des durch die vierte Leitung L4 zugeführten Gases kann je nach der gewünschten Reaktion das Gas direkt dem Reaktor zugeführt werden oder auch in eine Zuführleitung zum Reaktor zugeführt werden.

Mit dem Bezugszeichen 8 ist eine das Schutzgehäuse 5 durchgreifende Ableitung bezeichnet. Die Ableitung 8 kann mit einem Ventil zum wahlweisen Öffnen oder Verschließen versehen sein. Das an der Abführung vorgesehene Ventil kann auch mittels der Steuerung steuerbar sein.

Die Funktion des ersten Brennstoffzellensystems ist Folgende:
Einem ersten Reaktor R1, der hier als Reformer ausgebildet ist, wird über die erste Leitung L1 Brennstoff B, beispielsweise Methanol, zugeführt. Im ersten Reaktor R1 wird der Brennstoff B in ein gasförmiges erstes Brenngas BG1 umgewandelt und ausgangsseitig über die zweite Leitung L2 abgeführt.

Zumindest ein Teil des ersten Brenngases BG1 wird mittels des ersten Regelventils 2 abgezweigt und über die erste Zuleitung Z1 der Gastrenneinrichtung 1 zugeführt. Das erste Brenngas BG1 enthält insbesondere N₂, CO₂, H₂ sowie weitere Gase. Mittels der Gastrenneinrichtung 1 wird aus dem ersten Brenngas BG1 zumindest N₂ und/oder CO₂ und/oder H₂O abgetrennt. Die abgetrennten Gase oder eine Teilgasmischung aus N₂, CO₂ und H₂O werden sodann mittels der zweiten Zuleitung Z2 in das Schutzgehäuse 5 geleitet. Damit wird das Schutzgehäuse 5 mit einer Inertgas-Atmosphäre geflutet. Das in der Gastrenneinrichtung 1 gebildete bzw. verbleibende Restgas, welches aus H₂ gebildet oder mit H₂ angereichert ist, bildet ein zweites Brenngas BG2, welches über die dritte Zuleitung Z3 dem zweiten Reaktor R2 eingangsseitig zugeführt wird. Bei dem zweiten Reaktor R2 handelt es sich um eine oder mehrere Brennstoffzellen.

Das zweite Brenngas BG2 oder eine Mischung aus dem ersten BG1 und dem zweiten Brenngas BG2 wird im zweiten Reaktor R2 in elektrischen Strom umgewandelt. Dabei bilden sich ein Kathodenabgas KA sowie ein Anodenabgas AA, welche durch die dritte Leitung L3 bzw. dritte Leitungen L3 (hier nicht gezeigt) abgeführt werden.

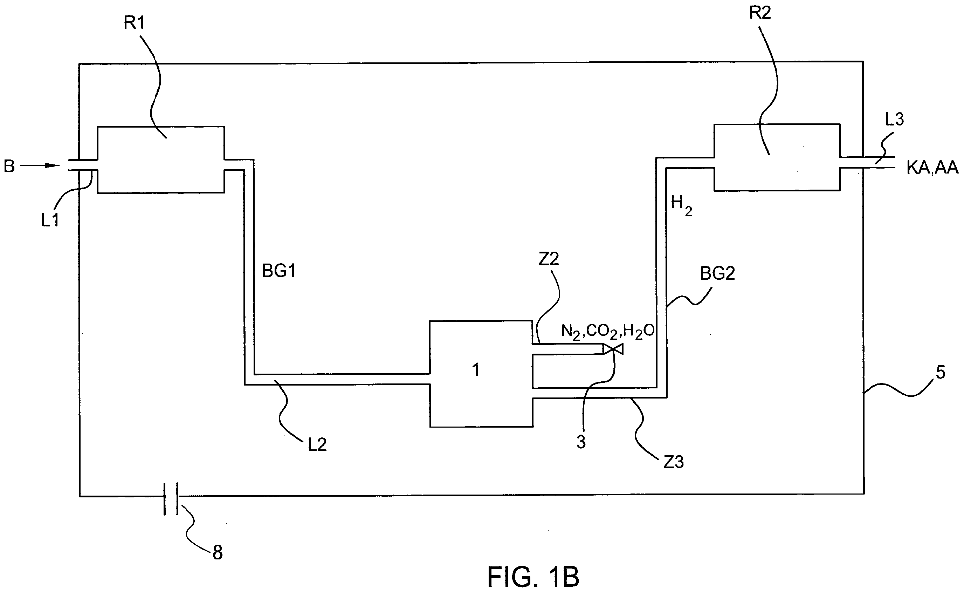

Fig. 1B zeigt eine nicht zur Erfindung gehörende vereinfachte, abgewandelte Ausgestaltung des ersten Brennstoffzellensystems gemäß Fig. 1A. Hier ist die erste Zuleitung Z1 weggelassen. Die zweite Leitung L2 mündet in die Gastrenneinrichtung 1. Ausgangsseitig erstreckt sich von der Gastrenneinrichtung 1 die dritte Zuleitung Z3 unmittelbar bis zum Eingang des zweiten Reaktors R2. Die ausgangsseitig von der Gastrenneinrichtung 1 sich erstreckende zweite Zuleitung Z2 ist mit dem zweiten Sperr- bzw. Regelventil 3 absperrbar.

Bei der abgewandelten Ausgestaltung gemäß Fig. 1B wird das vom ersten Reaktor R1 erzeugte erste Brenngas BG1 über die zweite Leitung L2 der Gastrenneinrichtung 1 zugeführt. Mittels der Gastrenneinrichtung 1 wird aus dem ersten Brenngas BG1 zumindest N₂ und/oder CO₂ und/oder H₂O abgetrennt. Die abgetrennten Gase werden sodann - wie bei dem ersten Brennstoffzellensystem gemäß Fig. 1A - in das Schutzgehäuse 5 geleitet. Das in der Gastrenneinrichtung 1 gebildete bzw. verbleibende Restgas, welches mit H₂ angereichert ist, bildet das zweite Brenngas BG2, welches über die dritte Zuleitung Z3 dem zweiten Reaktor R2 eingangsseitig zugeführt wird.

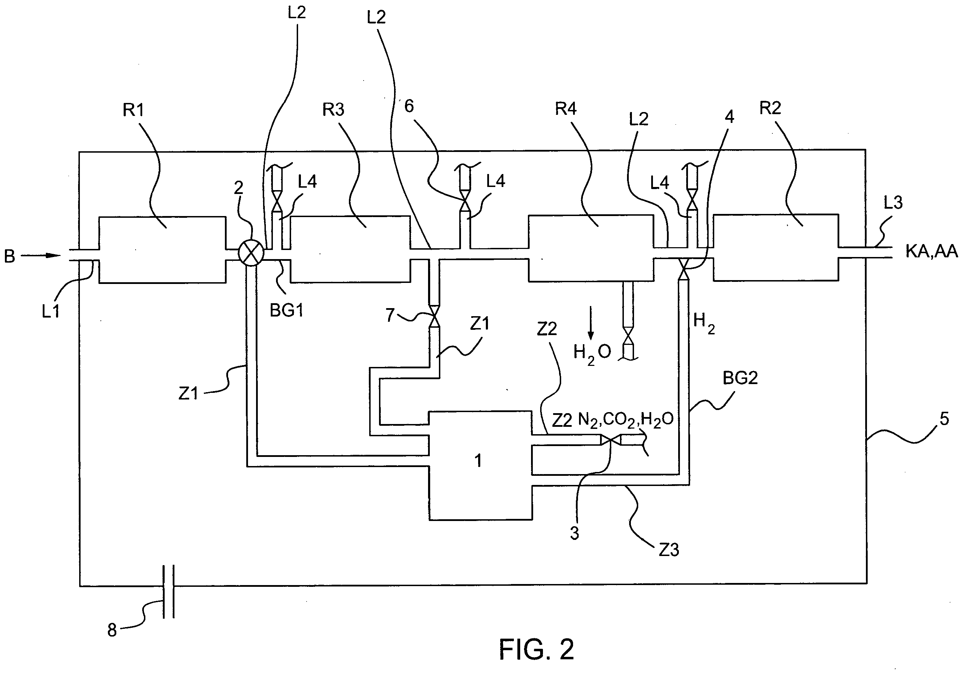

Fig. 2 zeigt eine zweite Ausgestaltung eines erfindungsgemäßen Brennstoffzellensystems. Dabei sind stromabwärts des ersten Reaktors R1 ein dritter Reaktor R3 und stromabwärts des dritten Reaktors R3 ein vierter Reaktor R4 vorgesehen, welchem der zweite Reaktor R2 nachgeordnet ist.

Bei dem dritten Reaktor R3 handelt es sich um eine Water-Gas-Shift-Stufe und beim vierten Reaktor R4 um eine PrOx-Stufe. Sowohl mit dem dritten R3 als auch mit dem vierten Reaktor R4 wird dem ersten Brenngas BG1 bzw. einem daraus gebildeten weiteren Gasgemisch CO entzogen. Zwischen den Reaktoren können in die zweite Leitung L2 vierte Leitungen L4 münden, über welche dem Strom des ersten Brenngases BG1 bzw. des weiteren Gasgemischs wahlweise weitere Kohlenwasserstoffe, Luft oder andere Stoffe zugeführt werden können, so dass die Molanteile zwischen den Reaktoren wahlweise beeinflusst werden können. Sofern über die vierte Leitung L4 ausschließlich Luft zugeführt wird, kann diese auch unmittelbar am stromabwärts folgenden Reaktor angeschlossen sein. D. h. in diesem Fall muss die vierte Leitung L4 nicht unbedingt in die Zuleitung zum stromabwärtigen Reaktor münden.

Am Eingang des vierten Reaktors R4 kann beispielsweise Luft zugeführt werden. Am Eingang des zweiten Reaktors R2 kann ebenfalls Luft zugeführt werden. Stromabwärts des dritten Reaktors R3 ist eine weitere erste Zuleitung Z1 vorgesehen, mit der ein aus dem dritten Reaktor R3 austretendes weiteres Gasgemisch der Gastrenneinrichtung 1 zugeführt werden kann. Mit dem Bezugszeichen 7 ist ein fünftes Sperr- bzw. Regelventil bezeichnet, mit dem ein Gasstrom durch die weitere erste Zuleitung Z1 ermöglicht, abgesperrt oder mengenmäßig gesteuert werden kann.

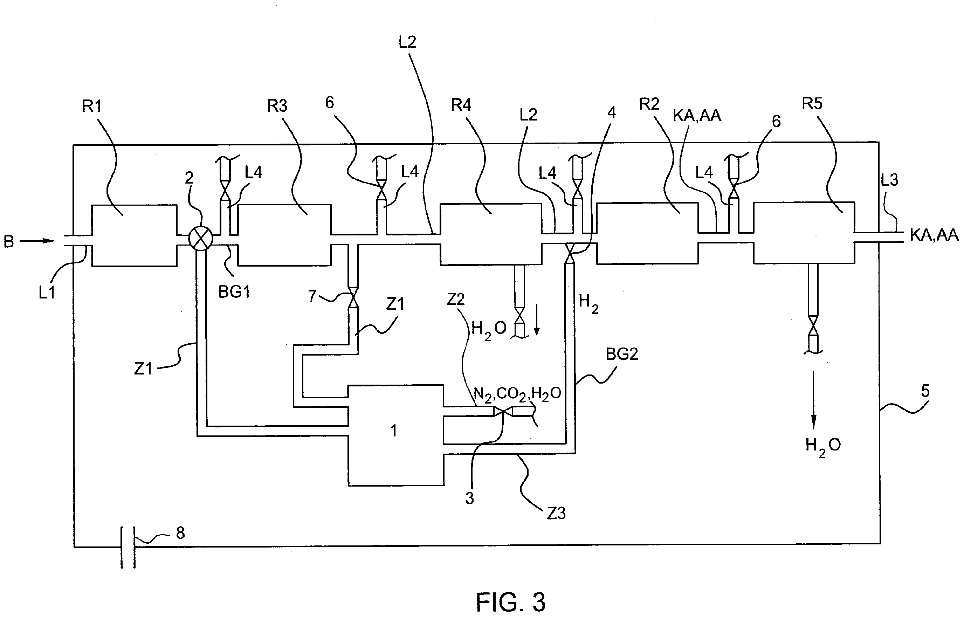

Bei dem in Fig. 3 gezeigten dritten Brennstoffzellensystem ist dem zweiten Reaktor R2 stromabwärts ein fünfter Reaktor R5 nachgeschaltet. Das Abgas des fünften Reaktors R5 kann - bei geeigneter Gaszufuhr über die dem fünften Reaktor R5 unmittelbar vorgeschaltete vierte Leitung L4 - ein inertes Gas sein oder werden, welches in das Schutzgehäuse 5 eingeleitet oder aus dem Prozess ausgekoppelt und an anderer Stelle verwendet werden kann. Der fünfte Reaktor R5 kann einen Kondensator umfassen. Damit kann Wasserdampf aus dem Abgas abgetrennt und als flüssiges Wasser für prozessinterne Verwendung, z. B. im Reaktor R1, bereitgestellt werden. Das Wasser kann auch aus dem Prozess ausgekoppelt und an anderer Stelle verwendet werden. - Auch der vierte Reaktor R4 kann einen Kondensator zur Wasserabtrennung umfassen, um Wasser stromaufwärts des zweiten Reaktors R2 abzutrennen.

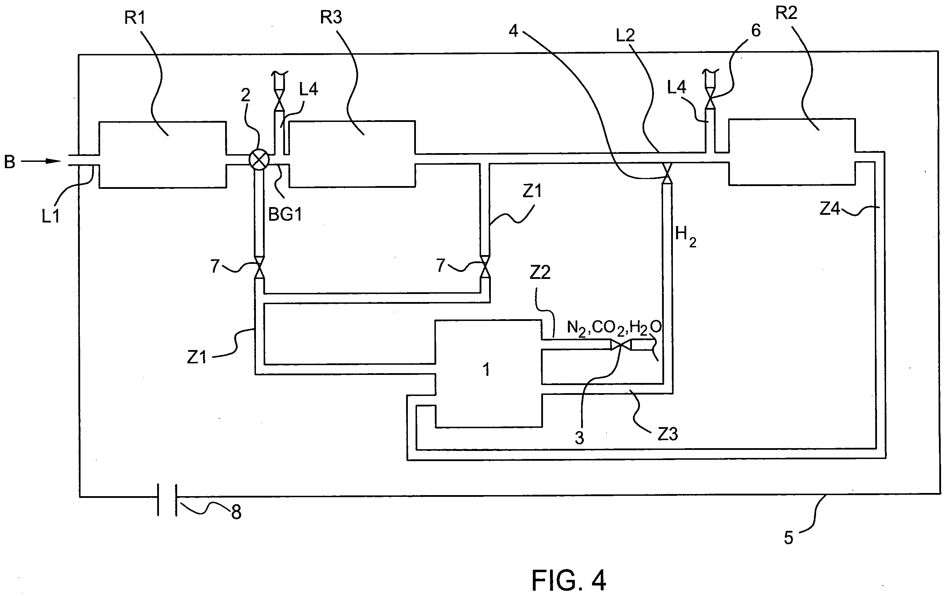

Fig. 4 zeigt ein viertes Brennstoffzellensystem. Dabei ist am zweiten Reaktor R2 ausgangsseitig eine vierte Zuleitung Z4 vorgesehen, mit der aus dem zweiten Reaktor R2 austretendes Kathode- KA und/oder Anodenabgas AA der Gastrenneinrichtung 1 zugeführt wird. Damit ist es möglich, Restwasserstoff aus dem Kathoden- KA und/oder Anodenabgas AA abzutrennen und erneut über die dritte Zuleitung Z3 dem zweiten Reaktor R2 zuzuführen.

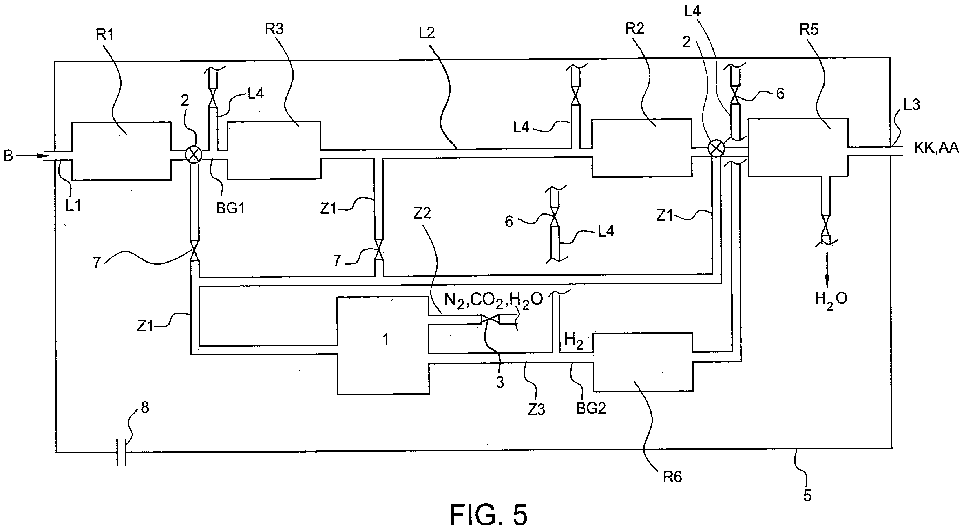

Bei dem in Fig. 5 gezeigten, nicht zur Erfindung gehörenden fünften Brennstoffzellensystem wird das mit der Gastrennrichtung 1 abgetrennte zweite Brenngas BG2, in diesem Fall Wasserstoff, über die dritte Zuleitung Z3 einem sechsten Reaktor R6 zugeführt. Es kann sich dabei um eine weitere Brennstoffzelle, beispielsweise eine NTPEM handeln. In diesem Fall umfasst der zweite Reaktor R2 als Brennstoffzelle vorzugsweise eine HTPEM.

Die Gastrenneinrichtung 1 ist zusätzlich mittels weiterer erster Zuleitungen Z1, welche stromabwärts des dritten Reaktors R3 und des zweiten Reaktors R2 abzweigen, verbunden. Damit ist es möglich, erstes Brenngas BG1 und/oder weiteres Gasgemisch an beliebigen Stellen aus der zweiten Leitung L2 bzw. dem Hauptstrom abzuzweigen und der Gastrenneinrichtung 1 zuzuführen.

In die dritte Zuleitung Z3 ist ein sechster Reaktor R6 eingeschaltet. Der sechste Reaktor R6 kann als Brennstoffzelle eine NTPEM umfassen. Ausgangsseitig weist der sechste Reaktor R6 eine vierte Leitung L4 mit einem vierten Sperr- bzw. Regelventil 6 auf, mit dem ein Massestrom eines durch die vierte Leitung L4 zugeführten Gases gesteuert oder geregelt werden kann.

Eine weitere vierte Leitung L4 kann von der dritten Zuleitung Z3 eine weitere vierte Leitung L4 mit einem Sperr- bzw. Regelventil 6 abzweigen.

Bei einer Modifikation des fünften Brennstoffzellensystems kann auch der dritte Reaktor R3 weggelassen werden. In diesem Fall umfasst der zweite Reaktor R2 als Brennstoffzelle eine SOFC. Der sechste Reaktor R6 umfasst als Brennstoffzelle eine NTPEM.

Ein Teil des das zweite Brenngas BG2 bildenden Wasserstoffs kann auch aus dem Prozess ausgekoppelt und an anderer Stelle verwendet werden. Mit der Gastrenneinrichtung 1 ist es auch möglich externe Verbraucher außerhalb des Brennstoffzellensystems zu speisen.

Obwohl es in den Figuren nicht gezeigt ist, kann es auch sein, dass das Schutzgehäuse 5 lediglich diejenigen Reaktoren umschließt, welche Brennstoffzellen umfassen.

Das vorgeschlagene Brennstoffzellensystem eignet sich insbesondere zur Verwendung in einem Fahrzeug, insbesondere einem Luftfahrzeug. Die Erfindung betrifft auch ein Luftfahrzeug, welches das oben beschriebene Brennstoffzellensystem umfasst.

### BEZUGSZEICHENLISTE

- 1: Gastrenneinrichtung
- 2: erstes Regelventil
- 3: zweites Regelventil
- 4: drittes Regelventil
- 5: Schutzgehäuse
- 6: viertes Regelventil
- 7: fünftes Regelventil

- AA: Anodenabgas
- B: Brennstoff
- BG1: erstes Brenngas
- BG2: zweites Brenngas
- KA: Kathodenabgas
- L1: erste Leitung
- L2: zweite Leitung
- L3: dritte Leitung
- L4: vierte Leitung
- R1: erster Reaktor
- R2: zweiter Reaktor
- R3: dritter Reaktor
- R4: vierter Reaktor
- R5: fünfter Reaktor
- R6: sechster Reaktor
- Z1: erste Zuleitung
- Z2: zweite Zuleitung
- Z3: dritte Zuleitung
- Z4: vierte Zuleitung

## Patentansprüche

1. Verfahren zur Erzeugung elektrischer Energie mittels eines mit einem Reformatgas betriebenen Brennstoffzellensystems, mit folgenden Schritten:
Bereitstellen eines Brennstoffzellensystems mit einem ersten Reaktor (R1) zur Umwandlung eines Brennstoffs (B) in ein erstes Brenngas (BG1) und einem dem ersten Reaktor (R1) stromabwärts nachgeschalteten zweiten Reaktor (R2), wobei der zweite Reaktor (R2) eine oder mehrere Brennstoffzellen zur Erzeugung elektrischer Energie unter Bildung eines Kathoden- (KA) sowie eines Anodenabgases (AA) bildet, und wobei zumindest der zweite Reaktor von einem Schutzgehäuse (5) umgeben ist,
Bereitstellen einer Gastrenneinrichtung (1), mit der zumindest eines der Gase CO₂, N₂ und/oder ein CO₂ und N₂ enthaltendes Teilgasgemisch aus dem ersten Brenngas (BG1) oder einem daraus gebildeten weiteren Gasgemisch abtrennbar ist,
Zuführen lediglich eines Teils des ersten Brenngases (BG1) oder des daraus gebildeten weiteren Gasgemischs zur Gastrenneinrichtung (1),
Abtrennen der Gase N₂ oder CO₂ oder des Teilgasgemischs aus dem ersten Brenngas (BG1) oder dem weiteren Gasgemisch,
Zuführen der abgetrennten Gase N₂ oder CO₂ oder des abgetrennten Teilgasgemischs als Inertgas in das Schutzgehäuse (5) und
Zuführen einer Mischung aus dem ersten Brenngas (BG1) und eines mit H₂ angereicherten, in der Gastrenneinrichtung (1) gebildeten Restgases als zweites Brenngas (BG2) zum Betrieb der Brennstoffzellen.

2. 4. Verfahren nach einem der vorhergehenden Ansprüche, wobei ein Anteil an CO im ersten Brenngas (BG1) mittels eines stromabwärts des ersten Reaktors (R1) nachgeschalteten, als Water-Gas-Shift-Stufe ausgebildeten dritten Reaktors (R3) und/oder eines als PrOx-Stufe ausgestalteten vierten Reaktors (R4) vermindert wird.

3. Verfahren nach einem der vorhergehenden Ansprüche, wobei das Kathoden-(KA) und/oder Anodenabgas (AA) zumindest teilweise als weiteres Gasgemisch der Gastrenneinrichtung (1) zugeführt wird.

4. Verfahren nach einem der vorhergehenden Ansprüche, wobei dem zweiten Reaktor (R2) stromabwärts ein fünfter Reaktor (R5) zur Umwandlung des Kathoden- (KA) und/oder Anodenabgases (AA) nachgeschaltet ist, und wobei ein im fünften Reaktor (R5) gebildetes Abgas als Inertgas verwendet und/oder als weiteres Gasgemisch der Gastrenneinrichtung (1) zugeführt wird.

5. Verfahren nach einem der vorhergehenden Ansprüche, wobei das erste Brenngas (BG1) oder das weitere Gasgemisch gasförmiges H₂O enthält, und wobei mittels der Gastrenneinrichtung (1) abgetrenntes gasförmiges H₂O als Inertgas verwendet wird.

6. Verfahren nach Anspruch 5, wobei das gasförmige H₂O in flüssiges H₂O umgewandelt und zur externen und/oder internen Verwendung ausgekoppelt wird.

7. Verfahren nach einem der vorhergehenden Ansprüche, wobei das erste Brenngas (BG1) oder das weitere Gasgemisch gasförmiges H₂O enthält, und wobei das gasförmige H₂O mittels eines Kondensators in flüssiges H₂O umgewandelt und zur externen und/oder internen Verwendung ausgekoppelt wird.

8. Verfahren nach einem der vorhergehenden Ansprüche, wobei bei der Umwandlung von gasförmigem H₂O in flüssiges H₂O freiwerdende Wärme zur externen Verwendung ausgekoppelt wird.

9. Verfahren nach einem der vorhergehenden Ansprüche, wobei das erste Brenngas (BG1) oder das weitere Gasgemisch in der Gastrenneinrichtung (1) unter Verwendung von Membranen in die Gase getrennt wird.

10. Verfahren nach einem der vorhergehenden Ansprüche, wobei als Brennstoff (B) ein Kohlenwasserstoff der allgemeinen Formel CₓH_{y}O_{z} oder ein Gemisch verschiedener Kohlenwasserstoffe, insbesondere Kerosin, Erdgas, Alkohol, vorzugsweise Methanol, verwendet wird.

11. Verfahren nach einem der vorhergehenden Ansprüche, wobei mittels der Gastrenneinrichtung (1) abgetrenntes CO₂ und/oder N₂ zur externen Verwendung, insbesondere zur Inertisierung eines Frachtraums und/oder eines Tankraums in einem Luftfahrzeug, ausgekoppelt wird.

12. Verfahren nach einem der vorhergehenden Ansprüche, wobei mittels der Gastrenneinrichtung (1) abgetrenntes CO₂ und/oder N₂ gemischt mit gasförmigem H₂O als Löschmittel für einen Frachtraum in einem Luftfahrzeug verwendet wird.

13. Verfahren nach einem der vorhergehenden Ansprüche, wobei ein Teil des ersten Brenngases (BG1) abgezweigt und zur externen Verwendung, insbesondere zum Betrieb einer weiteren Brennstoffzelle, ausgekoppelt wird.

14. Verfahren nach einem der vorhergehenden Ansprüche, wobei das Anodenabgas zur Verwendung als weiteres Brenngas zur externen Verwendung ausgekoppelt wird.

15. Verfahren nach einem der vorhergehenden Ansprüche, wobei sämtliche Reaktoren (R1, R2, R3, R4, R5), die Gastrenneinrichtung (1), eine oder mehrere Leitungen (L2, L4), welche die Reaktoren (R1, R2, R3, R4, R5) miteinander verbinden, mit der Gastrenneinrichtung (1) verbundene Zuleitungen (Z1, Z2, Z3, Z4) und/oder in die Leitungen (L2, L4) sowie Zuleitungen (Z1, Z2, Z3, Z4) eingeschaltete Regelventile (2, 3, 4) vom Schutzgehäuse umgeben sind.

16. Brennstoffzellensystem mit einem ersten Reaktor (R1) zur Umwandlung eines Brennstoffs (B) in ein erstes Brenngas (BG1),
einem dem ersten Reaktor (R1) stromabwärts nachgeschalteten zweiten Reaktor (R2), wobei der zweite Reaktor (R2) eine oder mehrere Brennstoffzellen zur Erzeugung elektrischer Energie unter Bildung eines Kathoden- (KA) sowie eines Anodenabgases (AA) bildet, und wobei zumindest der zweite Reaktor (R2) von einem Schutzgehäuse (5) umgeben ist, und wobei der erste Reaktor (R1) ausgangsseitig über eine zweite Leitung (L2) mit dem zweiten Reaktor (R2) verbunden ist,
einer Gastrenneinrichtung (1), mit der zumindest eines der Gase CO₂, N₂ und/oder ein CO₂ und N₂ enthaltendes Teilgasgemisch aus dem ersten Brenngas (BG1) oder einem daraus gebildeten weiteren Gasgemisch abtrennbar ist,
einer ersten Zuführeinrichtung (Z1) zum Zuführen lediglich eines Teils des ersten Brenngases (BG1) oder des daraus gebildeten weiteren Gasgemischs zur Gastrenneinrichtung (1),
einer zweiten Zuführeinrichtung (Z2) zum Zuführen der mittels der Gastrenneinrichtung (1) abgetrennten Gase N₂ oder CO₂ oder des abgetrennten Teilgasgemischs zum Schutzgehäuse (5) und
einer dritten Zuführeinrichtung (Z3) zum Zuführen eines mit H₂ angereicherten, in der Gastrenneinrichtung (1) gebildeten Restgases als zweites Brenngas (BG2) zum zweiten Reaktor (R2),
wobei dem zweiten Reaktor (R2) im Betrieb eine Mischung aus dem ersten Brenngas (BG1) und dem zweiten Brenngas (BG2) zugeführt ist.

17. Brennstoffzellensystem nach Anspruch 16, wobei mit der Gastrenneinrichtung (1) H₂ aus dem ersten Brenngas (BG1) oder dem daraus gebildeten weiteren Gasgemisch abtrennbar ist.

18. Brennstoffzellensystem nach einem der Ansprüche 16 bis 17, wobei dem ersten Reaktor (R1) stromabwärts ein als Water-Gas-Shift-Stufe ausgebildeter dritter Reaktor (R3) und/ oder ein als PrOx-Stufe ausgebildeter vierter Reaktor (R4) nachgeschaltet ist.

19. Brennstoffzellensystem nach einem der Ansprüche 16 bis 18, wobei eine vierte Zuführeinrichtung (Z4) zum Zuführen zumindest eines Teils des Kathoden- (KA) und/ oder des Anodenabgases (AA) als weiteres Gasgemisch zur Gastrenneinrichtung (1) vorgesehen ist.

20. Brennstoffzellensystem nach einem der Ansprüche 16 bis 19, wobei dem zweiten Reaktor (R2) stromabwärts ein fünfter Reaktor (R5) zur Umwandlung des Kathoden-(KA) und/oder Anodenabgases (AA) nachgeschaltet ist.

21. Brennstoffzellensystem nach einem der Ansprüche 16 bis 20, wobei eine Einrichtung zur Umwandlung von mittels der Gastrenneinrichtung (1) abgetrenntem gasförmigen H₂O in flüssiges H₂O vorgesehen ist.

22. Brennstoffzellensystem nach einem der Ansprüche 16 bis 21, wobei ein Kondensator zum Abtrennen von im ersten Brenngas (BG1) oder im weiteren Gasgemisch enthaltenem gasförmigen H₂O vorgesehen ist.

23. Brennstoffzellensystem nach einem der Ansprüche 16 bis 22, wobei eine Einrichtung zur Auskopplung von bei der Umwandlung von gasförmigem H₂O in flüssiges H₂O frei werdender Wärme vorgesehen ist.

24. Brennstoffzellensystem nach einem der Ansprüche 16 bis 23, wobei die Gastrenneinrichtung (1) zumindest eine Membran zur Trennung der im ersten Brenngas (BG1) oder im weiteren Gasgemisch enthaltenen Gase umfasst.

25. Brennstoffzellensystem nach einem der Ansprüche 16 bis 24, wobei sämtliche Reaktoren (R1, R2, R3, R4, R5), die Gastrenneinrichtung (1), eine oder mehrere Leitungen (L2, L4), welche die Reaktoren (R1, R2, R3, R4, R5) miteinander verbinden, mit der Gastrenneinrichtung (1) verbundene Zuleitungen (Z1, Z2, Z3, Z4) und/oder in die Leitungen (L2, L4) sowie Zuleitungen (Z1, Z2, Z3, Z4) eingeschaltete Regelventile (2, 3, 4) vom Schutzgehäuse umgeben sind.

## Claims

1. Method of generating electrical energy by means of a fuel cell system operated with reformate gas, having the following steps:
providing a fuel cell system having a first reactor (R1) for conversion of a fuel (B) to a first fuel gas (BG1) and a second reactor (R2) connected downstream of the first reactor (R1), where the second reactor (R2) forms one or more fuel cells for generation of electrical energy with formation of a cathode offgas (KA) and an anode offgas (AA), and where at least the second reactor is surrounded by a protective housing (5),
providing a gas separation unit (1) with which at least one of the gases CO₂, N₂ and/or a partial gas mixture comprising CO₂ and N₂ is separable from the first fuel gas (BG1) or a further gas mixture formed therefrom,
feeding at least a portion of the first fuel gas (BG1) or of the further gas mixture formed therefrom to the gas separation unit (1),
separating the gases N₂ or CO₂ or the partial gas mixture from the first fuel gas (BG1) or the further gas mixture,
feeding the gases N₂ or CO₂ separated or the partial gas mixture separated as inert gas into the protective housing (5) and
feeding a mixture of the first fuel gas (BG1) and an H₂-enriched tail gas formed in the gas separation unit (1) as second fuel gas (BG2) for operation of the fuel cells.

2. Method according to any of the preceding claims, wherein a proportion of CO in the first fuel gas (BG1) is reduced by means of a third reactor (R3) designed as a water-gas shift stage and connected downstream of the first reactor (R1) and/or of a fourth reactor (R4) configured as a PrOx stage.

3. Method according to any of the preceding claims, wherein the cathode offgas (KA) and/or anode offgas (AA) is supplied at least partly as further gas mixture to the gas separation unit (1).

4. Method according to any of the preceding claims, wherein a fifth reactor (R5) for conversion of the cathode offgas (KA) and/or anode offgas (AA) is connected downstream of the second reactor (R2), and wherein an offgas formed in the fifth reactor (R5) is used as inert gas and/or supplied as further gas mixture to the gas separation unit (1).

5. Method according to any of the preceding claims, the first fuel gas (BG1) or the further gas mixture contains gaseous H₂O, and wherein gaseous H₂O separated off by means of the gas separation unit (1) is used as inert gas.

6. Method according to Claim 5, wherein the gaseous H₂O is converted to liquid H₂O and discharged for external and/or internal use.

7. Method according to any of the preceding claims, wherein the first fuel gas (BG1) or the further gas mixture comprises gaseous H₂O, and wherein the gaseous H₂O is converted by means of a condenser to liquid H₂O and discharged for external and/or internal use.

8. Method according to any of the preceding claims, wherein heat released in the conversion of gaseous H₂O to liquid H₂O is discharged for external use.

9. Method according to any of the preceding claims, wherein the first fuel gas (BG1) or the further gas mixture is separated into the gases in the gas separation unit (1) using membranes.

10. Method according to any of the preceding claims, wherein the fuel (B) used is a hydrocarbon of the general formula CₓH_{y}O_{z} or a mixture of different hydrocarbons, especially kerosene, natural gas, alcohol, preferably methanol.

11. Method according to any of the preceding claims, wherein CO₂ and/or N₂ separated off by means of the gas separation unit (1) is discharged for external use, especially for inertization of a cargo hold and/or a tank hold in an aircraft.

12. Method according to any of the preceding claims, wherein CO₂ and/or N₂ separated off by means of the gas separation unit (1) is used mixed with gaseous H₂O as extinguishant for a cargo hold in an aircraft.

13. Method according to any of the preceding claims, wherein a portion of the first fuel gas (BG1) is branched off and discharged for external use, especially for operation of a further fuel cell.

14. Method according to any of the preceding claims, wherein the anode offgas is discharged for use as further fuel gas for external use.

15. Method according to any of the preceding claims, wherein all reactors (R1, R2, R3, R4, R5), the gas separation unit (1), one or more conduits (L2, L4) that connect the reactors (R1, R2, R3, R4, R5) to one another, feeds (Z1, Z2, Z3, Z4) connected to the gas separation unit (1) and/or control valves (2, 3, 4) inserted into the conduits (L2, L4) and feeds (Z1, Z2, Z3, Z4) are surrounded by the protective housing.

16. Fuel cell system having
a first reactor (R1) for conversion of a fuel (B) to a first fuel gas (BG1),
a second reactor (R2) connected downstream of the first reactor (R1), wherein the second reactor (R2) forms one or more fuel cells for generation of electrical energy using a cathode offgas (KA) and an anode offgas (AA), and wherein at least the second reactor (R2) is surrounded by a protective housing (5), and wherein the first reactor (R1) is connected to the second reactor (R2) on the output side via a second conduit (L2),
a gas separation unit (1) with which at least one of the gases CO₂, N₂ and/or a partial gas mixture containing CO₂ and N₂ is separable from the first fuel gas (BG1) or a further gas mixture formed therefrom,
a first feed unit (Z1) for feeding at least a portion of the first fuel gas (BG1) or the further gas mixture formed therefrom to the gas separation unit (1),
a second feed unit (Z2) for feeding the gases N₂ or CO₂ separated off by means of the gas separation unit (1) or the partial gas mixture separated off to the protective housing (5) and
a third feed unit (Z3) for feeding an H₂-enriched tail gas formed in the gas separation unit (1) as second fuel gas (BG2) to the second reactor (R2),
wherein the second reactor (R2) in operation is supplied with a mixture of the first fuel gas (BG1) and the second fuel gas (BG2).

17. Fuel cell system according to Claim 16, wherein the gas separation unit (1) can separate H₂ from the first fuel gas (BG1) or the further gas mixture formed therefrom.

18. Fuel cell system according to either of Claims 16 and 17, wherein a third reactor (R3) in the form of a water-gas shift stage and/or a fourth reactor (R4) in the form of a PrOx stage is connected downstream of the first reactor (R1).

19. Fuel cell system according to any of Claims 16 to 18, wherein a fourth feed unit (Z4) is provided for feeding at least a portion of the cathode offgas (KA) and/or the anode offgas (AA) as a further gas mixture to the gas separation unit (1).

20. Fuel cell system according to any of Claims 16 to 19, wherein a fifth reactor (R5) for conversion of the cathode offgas (KA) and/or anode offgas (AA) is connected downstream of the second reactor (R2).

21. Fuel cell system according to any of Claims 16 to 20, wherein a unit for conversion of gaseous H₂O separated off by means of the gas separation unit (1) to liquid H₂O is provided.

22. Fuel cell system according to any of Claims 16 to 21, wherein a condenser for separating gaseous H₂O present in the first fuel gas (BG1) or in the further gas mixture is provided.

23. Fuel cell system according to any of Claims 16 to 22, wherein a unit for discharge of heat released in the conversion of gaseous H₂O to liquid H₂O is provided.

24. Fuel cell system according to any of Claims 16 to 23, wherein the gas separation unit (1) comprises at least one membrane for separation of the gases present in the first fuel gas (BG1) or in the further gas mixture.

25. Fuel cell system according to any of Claims 16 to 24, wherein all reactors (R1, R2, R3, R4, R5), the gas separation unit (1), one or more conduits (L2, L4) that connect the reactors (R1, R2, R3, R4, R5) to one another, feeds (Z1, Z2, Z3, Z4) connected to the gas separation unit (1) and/or control valves (2, 3, 4) inserted into the conduits (L2, L4) and feeds (Z1, Z2, Z3, Z4) are surrounded by the protective housing.

## Revendications

1. Procédé pour la génération d'énergie électrique au moyen d'un système de pile à combustible fonctionnant avec un gaz de reformat, comportant les étapes suivantes :
mise à disposition d'un système de pile à combustible comportant un premier réacteur (R1) pour la transformation d'une matière combustible (B) en un premier gaz combustible (BG1) et un deuxième réacteur (R2) situé en aval du premier réacteur (R1), le deuxième réacteur (R2) formant une ou plusieurs piles à combustible destinées à la génération d'énergie électrique avec formation d'un gaz d'échappement de cathode (KA) ainsi que d'un gaz d'échappement d'anode (AA), et au moins le deuxième réacteur étant entouré d'un boîtier de protection (5),
mise à disposition d'une installation de séparation de gaz (1), avec laquelle au moins l'un des gaz CO₂, N₂ et/ou un mélange gazeux partiel contenant CO₂ et N₂ peut être séparé du premier gaz combustible (BG1) ou d'un mélange de gaz supplémentaire formé à partir de celui-ci,
alimentation uniquement d'une partie du premier gaz combustible (BG1) ou du mélange de gaz supplémentaire formé à partir de celui-ci à l'installation de séparation de gaz (1),
séparation des gaz N₂ ou CO₂ ou du mélange gazeux partiel d'avec le premier gaz combustible (BG1) ou le mélange de gaz supplémentaire,
alimentation des gaz N₂ ou CO₂ séparés ou du mélange gazeux partiel séparé en tant que gaz inerte dans le boîtier de protection (5) et alimentation d'un mélange du premier gaz combustible (BG1) et d'un gaz résiduel enrichi en H₂, formé dans l'installation de séparation de gaz (1), en tant que deuxième gaz combustible (BG2) pour le fonctionnement des piles à combustible.

2. Procédé selon l'une quelconque des revendications précédentes, une proportion de CO dans le premier gaz combustible (BG1) étant réduite au moyen d'un troisième réacteur (R3) situé en aval du premier réacteur (R1), conçu en tant qu'étage de conversion de gaz à l'eau et/ou d'un quatrième réacteur (R4) configuré comme étage PrOx.

3. Procédé selon l'une quelconque des revendications précédentes, le gaz d'échappement de cathode (KA) et/ou le gaz d'échappement d'anode (AA) étant alimenté au moins partiellement en tant que mélange gazeux supplémentaire à l'installation de séparation de gaz (1).

4. Procédé selon l'une quelconque des revendications précédentes, un cinquième réacteur (R5) pour la transformation du gaz d'échappement de cathode (KA) et/ou du gaz d'échappement d'anode (AA) étant situé en aval du deuxième réacteur (R2), et un gaz échappement formé dans le cinquième réacteur (R5) étant utilisé en tant que gaz inerte et/ou alimenté en tant que mélange gazeux supplémentaire à l'installation de séparation de gaz (1).

5. Procédé selon l'une quelconque des revendications précédentes, le premier gaz combustible (BG1) ou le mélange gazeux supplémentaire contenant du H₂O gazeux, et du H₂O gazeux séparé au moyen de l'installation de séparation de gaz (1) étant utilisé en tant que gaz inerte.

6. Procédé selon la revendication 5, le H₂O gazeux étant transformé en H₂O liquide et étant déchargé pour une utilisation externe et/ou interne.

7. Procédé selon l'une quelconque des revendications précédentes, le premier gaz combustible (BG1) ou le mélange gazeux supplémentaire contenant du H₂O gazeux, et le H₂O gazeux étant transformé en H₂O liquide au moyen d'un condensateur et étant déchargé pour une utilisation externe et/ou interne.

8. Procédé selon l'une quelconque des revendications précédentes, de la chaleur libérée lors de la transformation de H₂O gazeux en H₂O liquide étant déchargée pour une utilisation externe.

9. Procédé selon l'une quelconque des revendications précédentes, le premier gaz combustible (BG1) ou le mélange gazeux supplémentaire étant séparé en les gaz dans l'installation de séparation de gaz (1) en utilisant des membranes.

10. Procédé selon l'une quelconque des revendications précédentes, un hydrocarbure de formule générale CₓH_{y}O_{z} ou un mélange de différents hydrocarbures, en particulier du kérosène, du gaz naturel, un alcool, de préférence le méthanol, étant utilisé en tant que matière combustible (B).

11. Procédé selon l'une quelconque des revendications précédentes, du CO₂ et/ou du N₂ séparés au moyen de l'installation de séparation de gaz (1) étant déchargés pour une utilisation externe, en particulier pour l'inertisation d'une soute et/ou d'un réservoir d'un aéronef.

12. Procédé selon l'une quelconque des revendications précédentes, du CO₂ et/ou du N₂ séparés au moyen de l'installation de séparation de gaz (1), mélangés avec du H₂O gazeux étant utilisés en tant qu'agent d'extinction pour une soute d'un aéronef.

13. Procédé selon l'une quelconque des revendications précédentes, une partie du premier gaz combustible (BG1) étant dérivée et déchargée pour une utilisation externe, en particulier pour le fonctionnement d'une pile à combustible supplémentaire.

14. Procédé selon l'une quelconque des revendications précédentes, le gaz d'échappement d'anode étant déchargé pour une utilisation en tant que gaz combustible supplémentaire pour une utilisation externe.

15. Procédé selon l'une quelconque des revendications précédentes, tous les réacteurs (R1, R2, R3, R4, R5), l'installation de séparation de gaz (1), une ou plusieurs conduites (L2, L4), qui relient les réacteurs (R1, R2, R3, R4, R5) les uns avec les autres, des conduites d'alimentation (Z1, Z2, Z3, Z4) reliées à l'installation de séparation de gaz (1) et/ou des vannes de régulation (2, 3, 4) activées dans les conduites (L2, L4) ainsi que dans les conduites d'alimentation (Z1, Z2, Z3, Z4) étant entourés du boîtier de protection.

16. Système de pile à combustible comportant un premier réacteur (R1) pour la transformation d'une matière combustible (B) en un premier gaz combustible (BG1),
un deuxième réacteur (R2) situé en aval du premier réacteur (R1), le deuxième réacteur (R2) formant une ou plusieurs piles à combustible destinées à la génération d'énergie électrique avec formation d'un gaz d'échappement de cathode (KA) ainsi que d'un gaz d'échappement d'anode (AA), et au moins le deuxième réacteur (R2) étant entouré d'un boîtier de protection (5), et le premier réacteur (R1) étant relié, du côté sortie, au deuxième réacteur (R2) par l'intermédiaire d'une deuxième conduite (L2),
une installation de séparation de gaz (1), avec laquelle au moins l'un des gaz CO₂, N₂ et/ou un mélange gazeux partiel contenant CO₂ et N₂ peut être séparé du premier gaz combustible (BG1) ou d'un mélange de gaz supplémentaire formé à partir de celui-ci,
une première installation d'alimentation (Z1) pour l'alimentation uniquement d'une partie du premier gaz combustible (BG1) ou du mélange de gaz supplémentaire formé à partir de celui-ci à l'installation de séparation de gaz (1),
une deuxième installation d'alimentation (Z2) pour l'alimentation des gaz N₂ ou CO₂ séparés au moyen de l'installation de séparation de gaz (1) ou du mélange gazeux partiel séparé au boîtier de protection (5) et
une troisième installation d'alimentation (Z3) pour l'alimentation d'un gaz résiduel enrichi en H₂, formé dans l'installation de séparation de gaz (1), en tant que deuxième gaz combustible (BG2), au deuxième réacteur (R2),
un mélange du premier gaz combustible (BG1) et du deuxième gaz combustible (BG2) étant alimenté au deuxième réacteur (R2) en fonctionnement.

17. Système de pile à combustible selon la revendication 16, du H₂ pouvant être séparé, avec l'installation de séparation de gaz (1), du premier gaz combustible (BG1) ou du mélange gazeux supplémentaire formé à partir de celui-ci.

18. Système de pile à combustible selon l'une quelconque des revendications 16 et 17, un troisième réacteur (R3), conçu en tant qu'étage de conversion de gaz à l'eau et/ou un quatrième réacteur (R4) configuré comme étage PrOx étant situés en aval du premier réacteur (R1).

19. Système de pile à combustible selon l'une quelconque des revendications 16 à 18, une quatrième installation d'alimentation (Z4) pour l'alimentation d'au moins une partie du gaz d'échappement de cathode (KA) et/ou du gaz d'échappement d'anode (AA) en tant que mélange gazeux supplémentaire à l'installation de séparation de gaz (1), étant prévue.

20. Système de pile à combustible selon l'une quelconque des revendications 16 à 19, un cinquième réacteur (R5) pour la transformation du gaz d'échappement de cathode (KA) et/ou du gaz d'échappement d'anode (AA) étant situé en aval du deuxième réacteur (R2).

21. Système de pile à combustible selon l'une quelconque des revendications 16 à 20, une installation pour la transformation de H₂O gazeux séparé au moyen de l'installation de séparation de gaz (1) en H₂O liquide, étant prévue.

22. Système de pile à combustible selon l'une quelconque des revendications 16 à 21, un condensateur pour la séparation de H₂O gazeux contenu dans le premier gaz combustible (BG1) ou dans le mélange gazeux supplémentaire, étant prévu.

23. Système de pile à combustible selon l'une quelconque des revendications 16 à 22, une installation pour la décharge de chaleur libérée lors de la transformation de H₂O gazeux en H₂O liquide, étant prévue.

24. Système de pile à combustible selon l'une quelconque des revendications 16 à 23, l'installation de séparation de gaz (1) comprenant au moins une membrane pour la séparation des gaz contenus dans le premier gaz combustible (BG1) ou dans le mélange gazeux supplémentaire.

25. Système de pile à combustible selon l'une quelconque des revendications 16 à 24, tous les réacteurs (R1, R2, R3, R4, R5), l'installation de séparation de gaz (1), une ou plusieurs conduites (L2, L4), qui relient les réacteurs (R1, R2, R3, R4, R5) les uns avec les autres, des conduites d'alimentation (Z1, Z2, Z3, Z4) reliées à l'installation de séparation de gaz (1) et/ou des vannes de régulation (2, 3, 4) activées dans les conduites (L2, L4) ainsi que dans les conduites d'alimentation (Z1, Z2, Z3, Z4) étant entourés du boîtier de protection.
